# EUROPÄISCHE PATENTSCHRIFT

(11) **EP 3 105 555 B1**
(45) Veröffentlichungstag und Bekanntmachung des Hinweises auf die Patenterteilung: **08.01.2020**
(21) Anmeldenummer: 14704127.1
(22) Anmeldetag: 11.02.2014
(51) Int. Cl.: G01F 23/284, H01Q 1/22, G01F 1/80, G01N 11/14, H01Q 1/08

(54) **FÜLLSTANDMESSGERÄT MIT KLAPPBARER ANTENNENEINRICHTUNG**
FILLING LEVEL MEASURING DEVICE WITH A FOLDABLE ANTENNA DEVICE
APPAREIL DE MESURE DE NIVEAU DE REMPLISSAGE COMPRENANT UN DISPOSITIF D'ANTENNE REPLIABLE

(43) Veröffentlichungstag der Anmeldung: 21.12.2016
(73) Patentinhaber: VEGA Grieshaber KG, 77709 Wolfach (DE)
(72) Erfinder: WELLE, Roland, 77756 Hausach (DE); DIETERLE, Levin, 77709 Wolfach (DE)
(74) Vertreter: Maiwald Patent- und Rechtsanwaltsgesellschaft mbH
(86) Internationale Anmeldenummer: PCT/EP2014/052626
(87) Internationale Veröffentlichungsnummer: WO 2015/120879

(56) Entgegenhaltungen:
- DE-A1- 10 106 176
- DE-C1- 19 500 324
- US-A1- 2004 108 951
- US-A1- 2010 019 952

## Beschreibung

### Gebiet der Erfindung

Die Erfindung betrifft die Füllstand-, Volumen- und Massenbestimmung von Füll- und Schüttgütern. Insbesondere betrifft die Erfindung ein entsprechendes Messgerät zur Bestimmung einer Topologie einer Schüttgutoberfläche, die Verwendung eines derartigen Messgeräts zur Bestimmung der Viskosität einer bewegten Flüssigkeit und die Verwendung eines derartigen Messgeräts zur Bestimmung eines Massestroms eines sich auf einem Förderband befindenden Schüttguts.

### Hintergrund

Bekannte Füllstandmessgeräte oder andere Messgeräte, die im Bereich der Objektüberwachung oder Schüttgutüberwachung eingesetzt werden, senden elektromagnetische Wellen oder Ultraschallwellen aus, die an der Oberfläche des Füllguts, Schüttguts bzw. des entsprechenden Objekts zumindest teilweise reflektiert werden. Das zumindest teilweise reflektierte Sendesignal kann daraufhin von der Antenneneinrichtung des Messgeräts aufgenommen und von der damit verbundenen Elektronik ausgewertet werden.

Durch ein Abscannen der Oberfläche des Füllguts oder Schüttguts ist es möglich, die Topologie der Oberfläche zu bestimmen. Unter der "Topologie" ist im Rahmen der vorliegenden Anmeldung die Form der Oberfläche des Füllguts oder Schüttguts (oder allgemein eines Objektes) zu verstehen. In diesem Zusammenhang kann auch der Begriff "Topografie" verwendet werden.

Derartige Messgeräte zur Topologiebestimmung sind oft aufwändig in der Herstellung, in der Installation und im Betrieb.

US 2010/0019952 A1 beschreibt ein System zum Bestimmen eines Reliefs einer Oberfläche eines körnigen Materials, bei dem ein Radargerät entlang einer Kreisbahn verfahren wird.

DE 101 06 176 A1 beschreibt einen ausrichtbaren Messkopf für eine Füllstandmessvorrichtung.

US 2004/108951 A1 beschreibt eine Antennenvorrichtung für ein Radarfüllstandmessgerät, die schwenkbar gelagert ist.

DE 195 00 324 C1 beschreibt eine klappbare Parabolantenne.

### Zusammenfassung der Erfindung

Es ist eine Aufgabe der Erfindung, eine Vorrichtung zur Topologiebestimmung einer Schüttgutoberfläche bereitzustellen, welche sich leicht in oder an einen Behälter installieren lässt.

Diese Aufgabe wird durch die Merkmale der unabhängigen Patentansprüche gelöst. Weiterbildungen der Erfindung ergeben sich aus den abhängigen Patentansprüchen und der folgenden Beschreibung.

Ein erster Aspekt der Erfindung betrifft ein Messgerät zur Bestimmung einer Topologie einer Schüttgutoberfläche. Das Messgerät weist einen Grundkörper, eine Antriebsachse, eine Antenneneinrichtung und eine Dreheinrichtung auf. Die Antriebsachse ist drehbar gelagert an dem Grundkörper befestigt. Die Dreheinrichtung ist zum drehbaren Befestigen der Antenneneinrichtung an der Antriebsachse in derartiger Art und Weise ausgeführt, dass die Antenneneinrichtung einen eingeklappten Zustand und einen ausgeklappten Zustand einnehmen kann.

Auf diese Weise kann erreicht werden, dass die Antenneneinheit bei der Montage des Messgeräts an oder in einen Füllgutbehälter im eingeklappten Zustand durch eine verhältnismäßig kleine Montageöffnung geschoben werden kann. Diese Montageöffnung weist beispielsweise ein Innengewinde auf (beispielsweise: G 1 1/2"), in welches das Messgerät eingeschraubt wird. Auf diese Weise kann der Montageaufwand maßgeblich reduziert werden, da es nicht erforderlich ist, zunächst das Messgerät ohne Antenne an oder in dem Behälter anzubringen und daraufhin dann vom Inneren des Behälters aus die Antenne am Messgerät anzubringen.

Die Antenne kann während der Montage oder des Betriebs des Messgeräts über das Gelenk (Dreheinrichtung) aus ihrer Montagelage heraus in eine Arbeitsposition bewegt werden. Dadurch kann eine kleinere Behälteröffnung für die Montage verwendet werden, als dies bei bekannten Messgeräten der Fall ist.

Der Klappmechanismus der Antenneneinrichtung ermöglicht somit die Montage eines Messgeräts mit einer physikalisch verhältnismäßig großen Antenneneinrichtung durch eine vorgegebene, kleine Behälteröffnung.

Gemäß einer Ausführungsform der Erfindung ist die Dreheinrichtung zum drehbaren Befestigen der Antenneneinrichtung an der Antriebsachse derart ausgeführt, dass sich ein Winkel zwischen der Rotationsachse der Antriebsachse (also deren Längsachse) und einer Längsausdehnung der Antennenrichtung nach der Anbringung des Messgeräts an einem Schüttgutbehälter verändern lässt.

Die Dreheinrichtung kann derart ausgeführt sein, dass sie lediglich eine axiale Drehung der Antenneneinrichtung um eine relativ zur Dreheinrichtung starren Achse zulässt.

Gemäß einer weiteren Ausführungsform der Erfindung ist die Dreheinrichtung mit der Antenneneinrichtung an einer Position verbunden, welche sich nicht im Schwerpunkt der Antenneneinrichtung befindet, so dass die Antenneneinrichtung alleine durch die bei Rotation der Antenneneinrichtung durch die Antriebsachse auftretende Zentrifugalkraft vom eingeklappten Zustand in den ausgeklappten Zustand überführbar ist.

Es kann vorgesehen sein, dass das Messgerät mit der eingeklappten Antenne am Behälter montiert wird. Hierbei wird die eingeklappte Antenne durch die Behälteröffnung ins Innere des Behälters geschoben. Wird das Messgerät nun in Betrieb genommen, beginnt die Antriebsachse zu rotieren, so dass die Antenneneinrichtung in Rotation versetzt wird. Da die Dreheinrichtung nicht am Schwerpunkt der Antenne angebracht ist, wirkt aufgrund der Rotation ein Drehmoment auf die Antenne, welches durch die Zentrifugalkraft, die auf die Antenne wirkt, hervorgerufen wird. Dieses Drehmoment führt dazu, dass die Antenneneinrichtung vom eingeklappten Zustand in den ausgeklappten Zustand bewegt wird, in welchem dann die Messung vorgenommen werden kann.

Ein Feder- oder Zugmechanismus oder anderweitiger Mechanismus zum Ausklappen der Antenne ist nicht erforderlich, da alleine die Zentrifugalkraft für das Ausklappen sorgt.

Umgekehrt kann gemäß einer weiteren Ausführungsform der Erfindung vorgesehen sein, dass die Dreheinrichtung mit der Antenneneinrichtung in einer Position verbunden ist, welche sich nicht im Schwerpunkt der Antenneneinrichtung befindet, so dass die Antenneneinrichtung bei Stillstand der Antriebsachse (wenn sich die Antriebsachse also nicht dreht) alleine durch die auf die Antenneneinrichtung wirkende Gewichtskraft und das damit zusammenhängende Drehmoment von dem eingeklappten Zustand in den ausgeklappten Zustand überführbar ist.

Um dies zu erreichen, kann beispielsweise vorgesehen sein, dass ein Massenelement an der Antenneneinrichtung befestigt ist, welches dafür sorgt, dass ein Drehmoment auf die Antenneneinrichtung wirkt, wenn sie nicht rotiert wird und somit keine Zentrifugalkräfte wirken. Dieses Drehmoment bewirkt ein Einklappen der Antenne. Sind hingegen die Zentrifugalkräfte bei rotierender Antenne hinreichend groß, wirkt das Drehmoment in die umgekehrte Richtung, was ein Ausklappen der Antenne bewirkt.

Gemäß einer weiteren Ausführungsform der Erfindung weist das Messgerät eine flexible Umhüllung der Antenneneinrichtung und der Dreheinrichtung auf, um die Antenneneinrichtung und die Dreheinrichtung vor Verschmutzung zu schützen. Die flexible Umhüllung ist ausreichend durchlässig für die von der Antenne ausgesendeten Messsignale. Beispielsweise handelt es sich um einen PTFE-Gewebesack.

Gemäß einer weiteren Ausführungsform der Erfindung weist das Messgerät einen ersten und einen zweiten Befestigungsflansch auf. Der erste Befestigungsflansch ist starr mit dem Grundkörper des Messgeräts verbunden. Der zweite Befestigungsflansch ist verschiebbar entlang der Antriebsachse angeordnet und wird während des Montagevorgangs des Messgeräts am Behälter in Richtung des ersten Befestigungsflansches entlang der Antriebsachse verschoben, so dass sie sich nach der Anbringung des Messgeräts an dem Flansch des Behälters zwischen dem Behälterflansch und dem ersten Befestigungsflansch befindet.

Gemäß einer weiteren Ausführungsform der Erfindung ist ein Zugelement vorgesehen, das an der Antenneneinrichtung befestigt ist und zum Überführen der Antenneneinrichtung von dem eingeklappten Zustand in den ausgeklappten Zustand ausgeführt ist.

Das Zugelement kann beispielsweise in Form eines Bowdenzugs ausgeführt sein und mit dem zweiten Befestigungsflansch verbunden sein, so dass dieser bei seiner Bewegung in Richtung des ersten Befestigungsflansches bei der Montage des Messgeräts am Behälter an dem Zugelement zieht und somit die Antenneneinrichtung vom eingeklappten Zustand in den ausgeklappten Zustand zieht. Das "Zugelement" kann aber auch zum Ausüben einer Druckkraft auf die Antenneneinrichtung ausgeführt sein, um diese vom ausgeklappten Zustand in den eingeklappten Zustand zu überführen.

Gemäß einer weiteren Ausführungsform der Erfindung ist eine Arretierung vorgesehen, welche die Antenneneinrichtung im ausgeklappten Zustand hält, selbst falls sie nicht rotiert. Die Arretierung kann vor dem Abbau des Geräts vom Behälter gelöst werden. Beispielsweise klappt die Antenne dann selbstständig in den eingeklappten Zustand um, oder wird durch Herausziehen des Messgeräts aus der Behälteröffnung in den eingeklappten Zustand umgeklappt.

Gemäß einer weiteren Ausführungsform der Erfindung ist eine Antriebseinheit zum Rotieren der Antriebsachse und somit der Antenneneinrichtung um eine Rotationsachse, die in Längsrichtung der Antriebsachse verläuft, vorgesehen.

Gemäß einer weiteren Ausführungsform der Erfindung weist die Antenneneinrichtung ein Array auf, das zum Abstrahlen und zum Empfang des Messsignals, das von der Antenneneinrichtung ausgesendet wird, ausgeführt ist. Im ausgeklappten Zustand der Antenneneinrichtung ist das Array in einer Ebene angeordnet, welche mit der Rotationsachse der Antriebseinheit einen Winkel α einschließt, der ungleich 90 Grad beträgt. Beispielsweise beträgt der Winkel α zwischen 30 und 60 Grad, beispielsweise 45 Grad.

Hierdurch kann der Messbereich der Antenne durch Kombination mit einer Rotation vergrößert werden.

Die Rotationsachse der Antriebsachse kann beispielsweise eine vertikale Rotationsachse sein, wenn die Antennenvorrichtung in oder an einem Behälter, der das Füllgut enthält, installiert ist.

Beispielsweise handelt es sich bei dem Array um ein eindimensionales Array mit einer einzelnen Spalte an Strahlerelementen, dessen eine Spalte sich in Längsausdehnung der Antenneneinrichtung erstreckt. Bei den Strahlerelementen handelt es sich beispielsweise um im Wesentlichen zweidimensionale, flächig ausgebildete Patches. Die Strahlerelemente können aber auch in Form von anderweitig ausgebildeten Strahlern vorgesehen sein.

Das Array kann auch ein zweidimensionales Array mit mehreren parallel zueinander angeordneten Spalten und mehreren senkrecht dazu angeordneten Zeilen sein, die sich jeweils aus den einzelnen Strahlerelementen zusammensetzen. Die Spalten des Arrays erstrecken sich in Längsrichtung der Antenneneinheit und die Zeilen des Arrays erstrecken sich in Querrichtung der Antenneneinheit. Die Strahlerelemente jeder Zeile des Arrays können leitend miteinander verbunden sein.

Gemäß einer weiteren Ausführungsform der Erfindung weist die Antenneneinrichtung eine Hochfrequenzeinheit zum Erzeugen eines Messsignals auf, wobei die Hochfrequenzeinheit in die Antenneneinheit integriert ist. Die Hochfrequenzeinheit kann auch in die Antriebseinheit integriert sein.

Gemäß einer weiteren Ausführungsform der Erfindung weist die Antenneneinheit eine Auswerteelektronik auf, die zusammen mit der Antenneneinrichtung rotiert wird, wenn die Antenneneinrichtung von der Antriebseinheit in Rotation versetzt wird.

Beispielsweise befindet sich die Auswerteelektronik auf der Rückseite der Antenneneinrichtung, also auf der dem Füllgut oder Schüttgut abgewandten Seite.

Gemäß einer weiteren Ausführungsform der Erfindung ist die Auswerteelektronik in der Antenneneinrichtung oder in der Antriebseinheit integriert.

Gemäß einer weiteren Ausführungsform der Erfindung ist das Messgerät ein Füllstandmessgerät, beispielsweise ein Füllstandradar.

Gemäß einer weiteren Ausführungsform der Erfindung bezieht das Füllstandmessgerät seine zur Messung benötigte Energie ausschließlich über eine Zweileiterverbindung, wobei die Zweileiterleitung zur Kommunikation, insbesondere zur Ausgabe zumindest eines Topologiemesswertes oder eines daraus abgeleiteten Messwertes (z.B. der Masse im Behälter) ausgeführt ist. Das Füllstandmessgerät weist beispielsweise eine Energieversorgungs- und Kommunikationsschnittstelle zum Anschluss des Füllstandmessgeräts an eine Zweidrahtleitung, über welche das Füllstandmessgerät mit der für den Messbetrieb notwendigen Energie versorgt werden kann und über welche Messdaten an eine entfernte Steuereinheit übertragen werden können, auf.

Gemäß einem weiteren Aspekt der Erfindung ist die Verwendung eines oben und im Folgenden beschriebenen Messgeräts zur Bestimmung der Viskosität einer bewegten Flüssigkeit angegeben.

Gemäß einem weiteren Aspekt der Erfindung ist die Verwendung eines oben und im Folgenden beschriebenen Messgeräts zur Bestimmung eines Massestroms eines sich auf einem Förderband befindenden Schüttguts angegeben.

Im Folgenden werden mit Verweis auf die Figuren Ausführungsbeispiele der Erfindung beschrieben.

### Kurze Beschreibung der Figuren

Fig. 1 zeigt ein erstes Füllstandmessgerät, das an einen Behälter montiert ist.
Fig. 2 zeigt ein zweites Füllstandmessgerät, das ebenfalls an einen Behälter installiert ist.
Fig. 3 zeigt ein an einem Behälter installiertes Messgerät gemäß einem Ausführungsbeispiel der Erfindung.
Fig. 4 zeigt ein an einem Behälter installiertes Messgerät gemäß einem weiteren Ausführungsbeispiel der Erfindung.
Fig. 5 zeigt ein Messgerät gemäß einem weiteren Ausführungsbeispiel der Erfindung.
Fig. 6 zeigt das Messgerät der Fig. 5 mit ausgeklappter Antennenanordnung.
Fig. 7 zeigt ein Messgerät gemäß einem Ausführungsbeispiel der Erfindung zur Bestimmung eines Massestroms eines sich auf einem Förderband befindenden Schüttguts.
Fig. 8 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

Die vorliegende Erfindung wird im Umfeld von Füllstandmessgeräten angewendet, insbesondere wenn diese ausgeführt sind, die Topologie einer Füllgut- oder Schüttgutoberfläche zu bestimmen.

Auch sind Anwendungen im Bereich der Objektüberwachung möglich. Ein weiteres Anwendungsfeld ist die Massen- und /oder Volumenbestimmung frei zugänglicher Schüttguthalden.

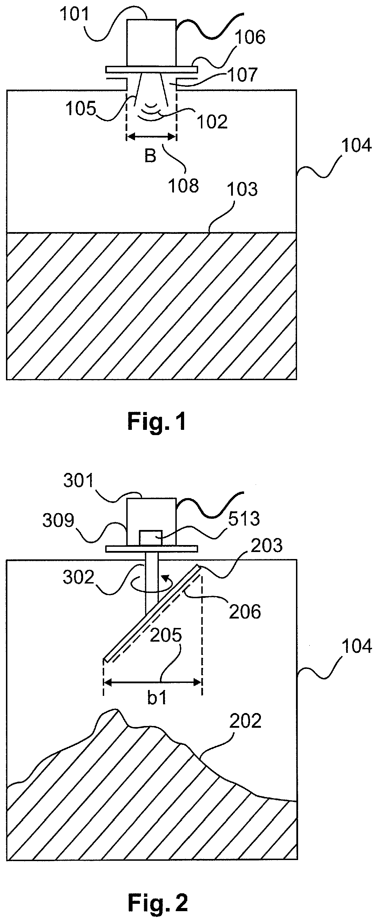

Fig. 1 zeigt ein Füllstandmessgerät 101, das durch Aussenden eines Messsignals 102, bei dem es sich beispielsweise um ein elektromagnetisches Messsignal handelt, in Richtung einer Füllgutoberfläche 103 ein Abbild der Reflexionsverhältnisse im Behälter 104 erfasst.

Das Füllstandmessgerät 101 oder zumindest die Sende- und/oder Empfangseinheit 105 wird mithilfe eines mechanischen Adapters 106, beispielsweise eines Flansches oder eines Gewindes, an einer vorhandenen Öffnung 107 des Behälters befestigt. Die Behälteröffnung 107 kann eine mechanische Ausdehnung B 108 besitzen, welche hinreichend groß ist, den Einbau zumindest der Sende- und/oder Empfangseinheit 107 des Füllstandmessgeräts 101 in den Behälter 104 zu ermöglichen.

Fig. 2 zeigt ein Füllstandmessgerät 301, welches die Topologie der Schüttgutoberfläche 202 erfassen kann. Hierfür besitzt das Messgerät 301 beispielsweise ein eindimensionales Antennenarray 203 aus mehreren, entlang einer einzelnen Spalte angeordneten Strahlerelementen 206. Das Antennenarray dient dem Aussenden und Empfangen von Radarsignalen. Es kann eine elektronische Strahlsteuerung vorgesehen sein, welche die Hauptabstrahl- und/oder Empfangsrichtung des Antennenarrays einstellen kann.

Um die Reflexionsverhältnisse aus unterschiedlichen Bereichen der Füllgutoberfläche 202 zu erfassen, wird die Sende- und/oder Empfangseinheit (im Folgenden auch Antenneneinrichtung genannt) mithilfe einer Antriebsachse 302, die mittels einer Antriebseinheit 513 angetrieben wird, gedreht. Die Sende- und/oder Empfangseinheit 203 kann verhältnismäßig große mechanische Abmessungen b1 205 aufweisen, welche im Allgemeinen größer sind als die Abmessungen üblicher Behälteröffnungen 108 (vgl. Fig. 1).

Die Antenneneinrichtung 203 des Füllstandmessgeräts wird daher im Regelfall nur in Verbindung mit nach oben offenen Behältern oder offenen Schüttguthalden verwendet. Alternativ wird die Antenneneinrichtung 203 nach Montage des Grundkörpers 309 an den Befestigungsflansch des Behälters vom Inneren des Behälters aus an den Grundkörper 309 montiert. Dies ist aufwändig und erfordert, dass ein Monteur das Innere des Behälters betritt.

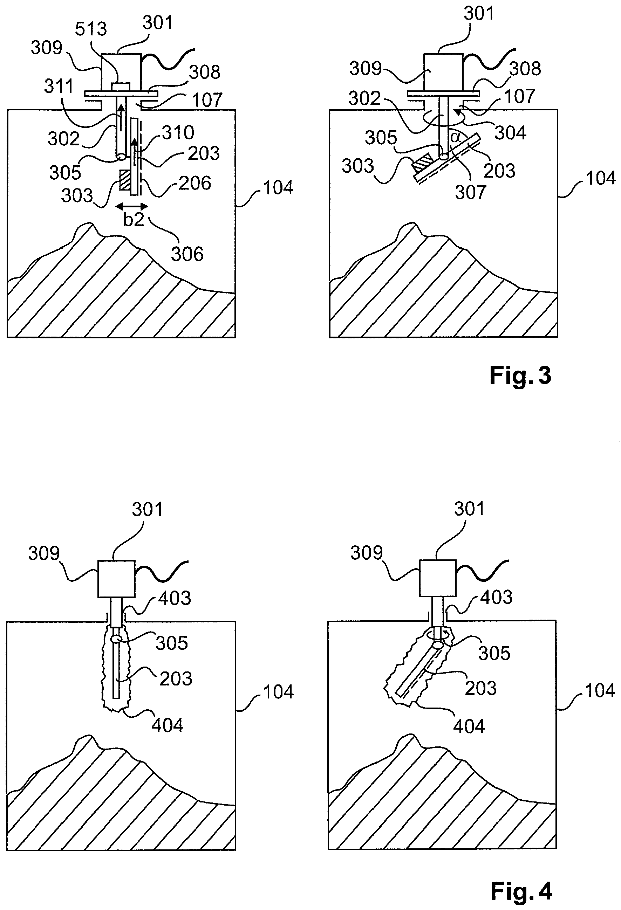

Fig. 3 zeigt ein Messgerät gemäß einem Ausführungsbeispiel der Erfindung. Das Messgerät 301 weist einen Grundkörper 309 auf, in dem beispielsweise eine Antriebseinheit 513 angeordnet ist. An dem Grundkörper befindet sich ein Befestigungsflansch 308, der das Messgerät 301 mit dem Behälterflansch verbindet. An den Grundkörper ist ein Antriebskörper 302 angeschlossen, dessen Rotationsachse 311 bei installiertem Messgerät vertikal ausgerichtet ist. Am Ende der Rotationsachse 302 befindet sich eine Dreheinrichtung 305, mithilfe derer die Antenneneinrichtung 203 mit der Antriebsachse 302 verbunden ist. Der Pfeil 310 bezeichnet die Längsausdehnung der Antenneneinrichtung 203.

An der Unterseite der Antenneneinrichtung befindet sich ein Array aus einzelnen Strahlerelementen 206, beispielsweise ein eindimensionales Array. Es kann aber auch ein zweidimensionales Array vorgesehen sein, bei dem beispielsweise die Strahlerelemente einer Zeile jeweils leitend miteinander verbunden sind.

Die Antenneneinheit 305 ist über die Antriebsachse 302 drehbar gelagert, und bildet zu dieser einen Winkel α von ungleich 90° aus. Besonders vorteilhalft hat sich ein Winkel von 45° herausgestellt, der die Erfassung von Signalen aus einem weiten Teilbereich des Behälters 308 ermöglicht.

Wird mittels digitaler Strahlformung ein Winkelbereich von ±45° erfasst, ist es somit in Kombination mit der Rotation der Antenne möglich, den kompletten das Schüttgut beinhaltenden Halbraum zu vermessen. Es sind aber auch Winkel <45° möglich, um z.B. Mehrdeutigkeiten bei der digitalen Strahlformung zu umgehen bzw. die Auflösung zu verbessern.

Entlang der Ausdehnung der Antenne sind mehrere Sende- und/oder Empfangselemente vorgesehen. Jedes dieser Elemente ist in der Lage, Signale aus unterschiedlichen Winkelrichtungen zu verarbeiten. Die von den Elementen einzeln empfangenen Signale können mit Hilfe bekannter Algorithmen der digitalen Strahlformung dazu verwendet werden, die Hauptabstrahl- und/oder Empfangsrichtung der Antenneneinrichtung in einem vorgebbaren Winkelbereich zu verändern. Wird hier ein Winkelbereich von ±45° zur senkrechten Hauptstrahlrichtung gewählt, so lässt sich bei Berücksichtigung der zusätzlich stattfindenden Rotation jeder Punkt der Oberfläche des Füllmediums messtechnisch erfassen.

Die Anordnung kombiniert in vorteilhafter Weise die Vorteile einer mechanischen Veränderung der Hauptstrahlrichtung (hier: Rotation) mit denen einer elektronischen Strahlschwenkung. Auf diese Weise lassen sich sehr schnelle Messraten erzielen (beispielsweise kleiner 10 Sekunden), in Kombination mit mechanisch einfacher Konstruktion (geringe Drehzahl, typischerweise ca. 60 min⁻¹) und stark vereinfachter Elektronikkomplexität (beispielsweise aufgrund der eindimensionale Struktur des Antennenarays) verbinden. Typischerweise reicht für die Realisierung der eindimensionalen Arrayzeile eine Anzahl von m ≤ 20 Elementen aus.

Wird innerhalb der nachgelagerten Signalverarbeitung die sich durch die Rotation der Antenne ergebende Dopplerverschiebung in den von den jeweiligen Arrayelementen erfassten Messsignale ausgewertet, so kann darüber hinaus die Fokussierung in Querrichtung (radialer Richtung (X_{A} - Ausdehnung)) deutlich verbessert werden. Hierfür können bekannte Algorithmen wie SAR (Synthetic Aperture Radar) und ROSAR (Rotor Synthetic Aperture Radar, basierend auf rotierenden Antennen) verwendet werden.

Die Antenne kann beispielsweise aus einem 1-dimensionalen Antennenarray mit m Einzelelementen bestehen. Die Einzelelemente können durch passend ausgestaltete Leiterplatten-Patches oder auch durch geeignete Hohlleiterenden oder sonstige bekannte Abstrahleinrichtungen realisiert sein.

Die von der Füllgutoberfläche reflektierten Signale werden von jedem der Strahlerelemente des Antennenarrays empfangen, und separat einer digitalen Auswerteeinheit zugeleitet. Diese ist beispielsweise in der Antriebseinheit untergebracht. Die Auswerteeinheit ist unter Verwendung von digitalen Strahlformungsalgorithmen in der Lage, durch Kombination dieser Signale die Hauptstrahl und/oder Empfangsrichtung der Antenne zu verändern, insbesondere in einem Winkel von ±45° zur Senkrechten 309 der Antenneneinheit.

Auf der Rückseite der Antenneneinrichtung kann ein Masseelement 303 vorgesehen sein.

Das Messgerät weist eine im Vergleich zu dem Gerät der Fig. 2 leicht verlängerte Antriebsachse 302 auf, an welcher über die Dreheinrichtung 305, im Folgenden auch Drehelement genannt, das Sende- und/oder Empfangselement 203, auch als Antenneneinrichtung oder Sende- und/oder Empfangseinheit bezeichnet, derart befestigt ist, dass dieses seinen Winkel α 307 zur Drehachse 302 verändern kann. Der Einbau in einen vorhandenen Behälter 104 ist zunächst sehr einfach, da die mechanischen Abmessungen des Füllstandmessgeräts 301, und hier insbesondere der Sende- und/oder Empfangseinheit 203, aufgrund der lotrechten Ausrichtung der Antenneneinrichtung (also der Ausrichtung der Längserstreckung der Antenneneinrichtung parallel zur Längsachse der Dreheinrichtung) auf einen verhältnismäßig kleinen Wert b2 306 reduziert werden.

Da dieser Wert kleiner ist als die mechanische Abmessung B 108 der Behälteröffnung 117, kann der Einbau und die mechanische Befestigung des Sensors 301 vereinfacht werden. Insbesondere kann eine Gewindebefestigung oder eine Flanschbefestigung mit Flansch 308 vorgesehen sein, ohne dass bei der Installation des Messgeräts am Behälter ein nachträglicher Anbau der Antenne erforderlich wäre.

Während der Inbetriebnahme des Messgeräts wird die Antenneneinrichtung 203 durch die sich drehende Antriebsachse 302 in eine Rotationsbewegung versetzt. Die auf das an der Antenneneinrichtung 203 montierte Massenelement 303 wirkende, drehzahlabhängige Zentrifugalkraft bewirkt nun eine Auslenkung der Antenneneinrichtung auf den für die eigentliche Erfassung der Topologie der Schüttgutoberfläche benötigten Arbeitswinkel α 307. Nach Außerbetriebsetzung des Messgeräts 301 bewirkt die Gewichtskraft des Massenelements 303 ein Zurückkehren der Antenneneinrichtung 203 an die ursprüngliche eingeklappte Position, wodurch eine Demontage des Messgeräts ermöglicht wird.

Fig. 4 zeigt ein weiteres Ausführungsbeispiel eines Messgeräts. Der Behälter 104 besitzt eine Gewindeöffnung 403 mit einem Durchmesser von beispielsweise 1 1/2 oder 2 Zoll, in welcher das Füllstandmessgerät 301 durch Einschrauben mechanisch befestigt werden kann. Das Messgerät 301 besitzt wiederum eine über ein Drehgelenk 305 auslenkbare Antenneneinrichtung 203, welche nach Inbetriebnahme unter dem Einfluss der Zentrifugalkraft in den Arbeitswinkel α 307 ausgelenkt wird (sog. ausgeklappter Zustand). Um die Messanordnung, insbesondere die Antenneneinrichtung 203 und die in Form eines Drehgelenks 305 ausgeführte Dreheinrichtung, vor Verschmutzung zu schützen, kann ein Radom 404 vorgesehen sein, welches beispielsweise in Form eines PTFE-Gewebesacks ausgeführt sein kann. Durch die mechanische Flexibilität des Radoms ergibt sich die Möglichkeit einer Montage durch eine sehr kleine Behälteröffnung 403 hindurch.

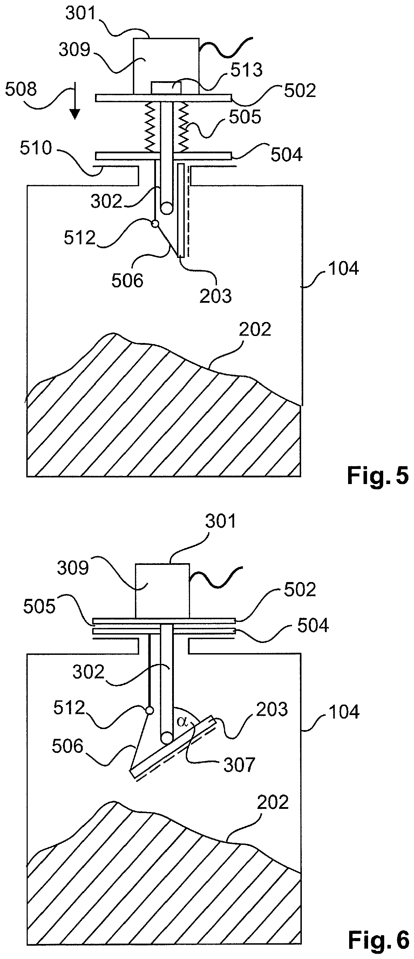

Ein weiteres Ausführungsbeispiel des Messgeräts verzichtet gänzlich auf die Ausnutzung der Zentrifugalkraft zur Positionierung der Sende- und/oder Empfangseinheit 203 während der Betriebsphase des Messgeräts. Ein entsprechendes Ausführungsbeispiel ist in den Figuren 5 und 6 dargestellt.

Fig. 5 zeigt das Messgerät 301 während dessen Installationsphase am Behälterflansch. Das Gerät 301 besitzt einen ersten statisch mit dem Grundkörper (Gehäuse) 309 des Messgeräts verbundenen ersten Flansch 502 sowie einen entlang der Antriebsachse 203 verschiebbaren zweiten Befestigungsflansch 504, welcher im ausgebauten Zustand durch eine Federvorrichtung 505 auf einer vordefinierten Entfernung vom statischen Befestigungsflansch 502 gehalten wird.

Der zweite Befestigungsflansch 504 ist über ein Zugelement 506, das eine Umlenkvorrichtung 512 aufweisen kann, mit der drehbar gelagerten Sende- und/oder Empfangseinheit 203 verbunden.

Bei der Montage des Messgeräts 301 am Behälter erfolgt ein Niederdrücken (siehe Pfeil 508) in Richtung des Behälterflansches 510 des Behälters 104. Hierbei wird über die Umlenkvorrichtung 512 die Antenneneinrichtung 203 in einen Arbeitswinkel α 307 ausgelenkt, der den Betrieb des Messgeräts 301 zur Erfassung der Topologie der Oberfläche 202 des Mediums ermöglicht. Die Demontage des Geräts erfolgt in umgekehrter Wirkreihenfolge, wobei der Federmechanismus 505 ein Zurückführen der Antenneneinrichtung 203 an die ursprüngliche Stelle (eingeklappter Zustand) bewirkt. Hierdurch wird die Möglichkeit einer Demontage des Messgeräts gewährleistet, ohne dass die Antenneneinrichtung davor abgenommen werden muss.

Das Zugelement kann beispielsweise in Form eines Zugseils oder Bowdenzugs vorgesehen sein. In diesem Fall ist es notwendig, dass zum Überführen der Antenneneinrichtung vom ausgeklappten Zustand (Fig. 6) in den eingeklappten Zustand (Fig. 5) die auf die Antenne wirkenden Gewichtskräfte ein entsprechendes Drehmoment erzeugen, welches die Antenne einklappen lässt. Dies wird dadurch erreicht, dass der Bereich der Antenne, der beim Einklappen nach unten kippt, schwerer ist, als derjenige Bereich, der beim Einklappen der Antenne nach oben kippt.

Alternativ kann die Zugeinrichtung derart ausgeführt sein, dass sie nicht nur eine Zugkraft, sondern auch eine Druckkraft ausüben kann.

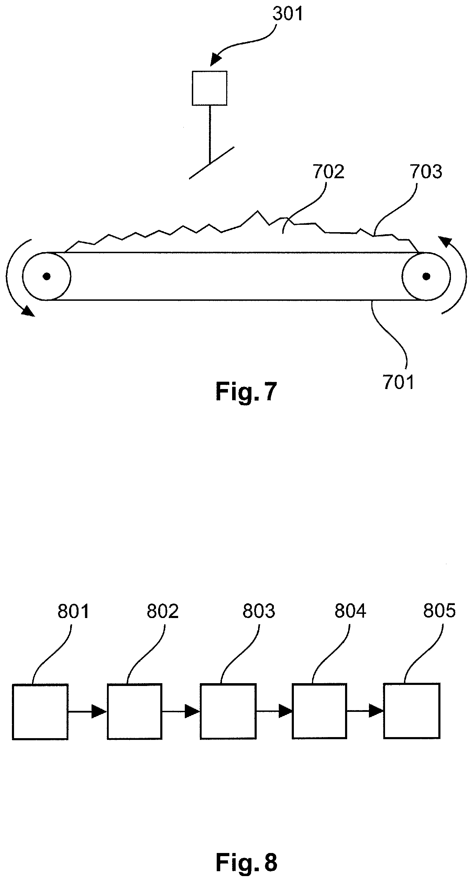

Fig. 7 zeigt ein Förderband 701, auf welchem Schüttgut 702 transportiert wird. Das Schüttgut bildet eine unregelmäßige Oberfläche 703 aus, welche von dem Messgerät 301 vermessen werden kann. Bei dem Messgerät 301 kann es sich beispielsweise um ein Füllstandmessgerät, z. B. ein Füllstandradargerät, handeln, welches neben der Topografie der Schüttgutoberfläche auch den Füllstand eines Füllguts berechnen und ausgeben kann. Insgesamt ist dieses Gerät in der Lage, den Massestrom des Schüttguts auf dem Förderband zu bestimmen.

Fig. 8 zeigt ein Flussdiagramm eines Verfahrens gemäß einem Ausführungsbeispiel der Erfindung. In Schritt 801 wird eine an eine Antriebsachse eines Messgeräts angebrachte Antenneneinrichtung durch die Öffnung eines Füllgutbehälters geführt. In Schritt 802 wird das Messgerät am Behälter befestigt und in Schritt 803 wird die Antenneneinrichtung vom eingeklappten Zustand in einen ausgeklappten Zustand überführt. Daraufhin wird in Schritt 804 die Antenne über die Antriebsachse in Rotation versetzt und in Schritt 805 die Topologie der Füllgutoberfläche bestimmt.

Ergänzend sei darauf hingewiesen, dass "umfassend" und "aufweisend" keine anderen Elemente oder Schritte ausschließt und "ein" oder "eine" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Messgerät zur Bestimmung einer Topologie einer Schüttgutoberfläche, aufweisend:
einen Grundkörper (309);
eine Antenneneinrichtung (203) mit einem Array aus Strahlerelementen (206) zur elektronischen Strahlsteuerung;
eine vertikale Antriebsachse (302), die um ihre Längsachse drehbar gelagert an dem Grundkörper befestigt ist, um die Antenneneinrichtung zu rotieren;
eine Dreheinrichtung (305) zum drehbaren Befestigen der Antenneneinrichtung an der Antriebsachse derart, dass die Antenneneinrichtung einen eingeklappten Zustand und einen ausgeklappten Zustand einnehmen kann.

2. Messgerät nach Anspruch 1,
wobei die Dreheinrichtung (305) zum drehbaren Befestigen der Antenneneinrichtung (203) an der Antriebsachse derart ausgeführt ist, dass sich ein Winkel zwischen der Rotationsachse (311) der Antriebsachse (302) und einer Längsausdehnung (310) der Antenneneinrichtung nach der Anbringung des Messgeräts an einem Schüttgutbehälter verändern lässt.

3. Messgerät nach einem der vorhergehenden Ansprüche,
wobei die Dreheinrichtung (305) mit der Antenneneinrichtung (203) an einer Position verbunden ist, welche sich nicht im Schwerpunkt der Antenneneinrichtung befindet, so dass die Antenneneinrichtung alleine durch die bei Rotation der Antenneneinrichtung durch die Antriebsachse (302) auftretende Zentrifugalkraft vom eingeklappten Zustand in den ausgeklappten Zustand überführbar ist.

4. Messgerät nach einem der vorhergehenden Ansprüche,
wobei die Dreheinrichtung (305) mit der Antenneneinrichtung (203) an einer Position verbunden ist, welche sich nicht im Schwerpunkt der Antenneneinrichtung befindet, so dass die Antenneneinrichtung bei Stillstand der Antriebsachse (302) alleine durch die auf die Antenneneinrichtung wirkende Gewichtskraft und das damit zusammenhängende Drehmoment von dem ausgeklappten Zustand in den eingeklappten Zustand überführbar ist.

5. Messgerät nach einem der vorhergehenden Ansprüche,
aufweisend eine flexible Umhüllung (404) der Antenneneinrichtung (203), um die Antenneneinrichtung und die Dreheinrichtung (305) vor Verschmutzung zu schützen.

6. Messgerät nach einem der vorhergehenden Ansprüche, aufweisend:
einen ersten Befestigungsflansch (502), der starr mit dem Grundkörper (309) verbunden ist;
einen zweiten Befestigungsflansch (504), der entlang der Antriebsachse (302) verschiebbar angeordnet ist und sich nach Anbringung des Messgeräts an einem Behälterflansch (510) zwischen dem Behälterflansch und dem ersten Befestigungsflansch befindet.

7. Messgerät nach einem der vorhergehenden Ansprüche, aufweisend:
ein Zugelement (506), das an der Antenneneinrichtung (203) befestigt ist und zum Überführen der Antenneneinrichtung von dem eingeklappten Zustand in den ausgeklappten Zustand ausgeführt ist.

8. Messgerät nach einem der vorhergehenden Ansprüche, weiter aufweisend:
eine Antriebseinheit (513) zum Rotieren der Antriebsachse (302) und der Antenneneinrichtung (203) um die Längsachse.

9. Messgerät nach einem der vorhergehenden Ansprüche,
wobei das Array ein eindimensionales Array mit einer einzelnen Spalte an Strahlerelementen (206) ist, dessen eine Spalte sich in Längsausdehnung (310) der Antenneneinrichtung (203) erstreckt.

10. Messgerät nach einem der vorhergehenden Ansprüche,
wobei das Messgerät ein Füllstandmessgerät ist.

11. Verwendung eines Messgeräts nach einem der Ansprüche 1 bis 10 zur Bestimmung der Viskosität einer bewegten Flüssigkeit.

12. Verwendung eines Messgeräts nach einem der Ansprüche 1 bis 10 zur Bestimmung eines Massestroms eines sich auf einem Förderband befindenden Schüttguts.

## Claims

1. Measurement device for determining a topology of a bulk material surface, comprising:
a main body (309);
an antenna assembly (203) comprising an array consisting of radiator elements (206) for controlling the electronic beam;
a vertical drive shaft (302) that is fastened to the main body in a rotatably mounted manner about the longitudinal axis thereof for rotating the antenna assembly;
a rotation assembly (305) for rotatably fastening the antenna assembly to the drive shaft such that the antenna assembly can assume a folded state and an unfolded state.

2. Measurement device according to claim 1,
wherein the rotation assembly (305) for rotatably fastening the antenna assembly (203) to the drive shaft is designed such that an angle between the rotational axis (311) of the drive shaft (302) and a longitudinal extension (310) of the antenna assembly can change after the measurement device has been attached to a bulk material container.

3. Measurement device according to any of the preceding claims,
wherein the rotation assembly (305) is connected to the antenna assembly (203) at a position which is not at the centre of gravity of the antenna assembly such that the antenna assembly can be transferred from the folded state into the unfolded state merely by means of the centrifugal force that occurs when the antenna assembly is rotated by the drive shaft (302).

4. Measurement device according to any of the preceding claims,
wherein the rotation assembly (305) is connected to the antenna assembly (203) at a position which is not at the centre of gravity of the antenna assembly such that, when the drive shaft (302) is stationary, the antenna assembly can be transferred from the unfolded state into the folded state merely by means of the gravitational force acting on the antenna assembly and by means of the associated torque.

5. Measurement device according to any of the preceding claims,
comprising a flexible cover (404) for the antenna assembly (203) in order to protect the antenna assembly and the rotation assembly (305) from becoming soiled.

6. Measurement device according to any of the preceding claims, comprising:
a first fastening flange (502) which is rigidly connected to the main body (309);
a second fastening flange (504) which is arranged so as to be movable along the drive shaft (302) and is located between a container flange and the first fastening flange once the measurement device is attached to a container flange (510).

7. Measurement device according to any of the preceding claims, comprising:
a traction element (506) which is fastened to the antenna assembly (203) and is designed to transfer the antenna assembly from the folded state into the unfolded state.

8. Measurement device according to any of the preceding claims, further comprising:
a drive unit (513) for rotating the drive shaft (302) and the antenna assembly (203) about the longitudinal axis.

9. Measurement device according to any of the preceding claims,
wherein the array is a one-dimensional array comprising a single column of radiator elements (206), of which a column extends in the longitudinal extension (310) of the antenna assembly (203).

10. Measurement device according to any of the preceding claims,
wherein the measurement device is a fill level measurement device.

11. Use of a measurement device according to any of claims 1 to 10 for determining the viscosity of a moving liquid.

12. Use of a measurement device according to any of claims 1 to 10 for determining a mass flow of a bulk material on a conveyor belt.

## Revendications

1. Appareil de mesure pour la détermination d'une topologie d'une surface d'un solide en vrac, comportant :
un corps de base (309) ;
un dispositif d'antenne (203) doté d'un réseau d'éléments rayonnants (206) pour le guidage électronique d'un faisceau ;
un axe d'entraînement vertical (302), lequel est fixé au corps de base en rotation autour de son axe longitudinal, afin de faire tourner le dispositif d'antenne ;
un dispositif de rotation (305) pour fixer en rotation le dispositif d'antenne à l'axe d'entraînement de sorte que le dispositif d'antenne peut occuper un état escamoté et un état déployé.

2. Appareil de mesure selon la revendication 1, dans lequel le dispositif de rotation (305) est réalisé pour la fixation en rotation du dispositif d'antenne (203) à l'axe d'entraînement de telle sorte qu'un angle entre l'axe de rotation (311) de l'axe d'entraînement (302) et une étendue longitudinale (310) du dispositif d'antenne peut être modifié après le montage de l'appareil de mesure à un conteneur de solide en vrac.

3. Appareil de mesure selon l'une des revendications précédentes, dans lequel le dispositif de rotation (305) est relié au dispositif d'antenne (203) à une position ne se trouvant pas au centre de gravité du dispositif d'antenne, de sorte que le dispositif d'antenne peut passer de l'état escamoté à l'état déployé par la seule force centrifuge produite par la rotation du dispositif d'antenne par l'axe d'entraînement (302).

4. Appareil de mesure selon l'une des revendications précédentes, dans lequel le dispositif de rotation (305) est relié au dispositif d'antenne (203) à une position ne se trouvant pas au centre de gravité du dispositif d'antenne, de sorte que, lorsque l'axe d'entraînement (302) est immobile, le dispositif d'antenne peut passer de l'état déployé à l'état escamoté par la seule force de pesanteur s'exerçant sur le dispositif d'antenne et le couple en résultant.

5. Appareil de mesure selon l'une des revendications précédentes, comportant :
une enveloppe flexible (404) du dispositif d'antenne (203), afin de protéger le dispositif d'antenne et le dispositif de rotation (305) contre les salissures.

6. Appareil de mesure selon l'une des revendications précédentes, comportant :
une première collerette de fixation (502), laquelle est reliée rigidement au corps de base (309) ;
une deuxième collerette de fixation (504), laquelle est agencée en coulissement le long de l'axe d'entraînement (302) et se trouve, après le montage de l'appareil de mesure à une collerette de maintien (510), entre la collerette de maintien et la première collerette de fixation.

7. Appareil de mesure selon l'une des revendications précédentes, comportant :
un élément de traction (506), lequel est fixé au dispositif d'antenne (203) et est réalisé pour passer le dispositif d'antenne de l'état escamoté à l'état déployé.

8. Appareil de mesure selon l'une des revendications précédentes, comportant en outre :
une unité d'entraînement (513) pour faire tourner l'axe d'entraînement (302) et le dispositif d'antenne (203) autour de l'axe longitudinal.

9. Appareil de mesure selon l'une des revendications précédentes, dans lequel le réseau est un réseau unidimensionnel doté d'une unique colonne d'éléments rayonnants (206), dont une colonne s'étend dans l'étendue longitudinale de l'unité d'antenne (203).

10. Appareil de mesure selon l'une des revendications précédentes, dans lequel l'appareil de mesure est un appareil de mesure du niveau remplissage.

11. Utilisation d'un appareil de mesure selon l'une des revendications 1 à 10 pour déterminer la viscosité d'un fluide mis en mouvement.

12. Utilisation d'un appareil de mesure selon l'une des revendications 1 à 10 pour déterminer un débit massique d'un solide en vrac se trouvant sur une bande convoyeuse.
